# EUROPEAN PATENT SPECIFICATION

(11) **EP 1 093 725 B1**
(45) Date of publication and mention of the grant of the patent: **06.07.2005**
(21) Application number: 99830655.9
(22) Date of filing: 18.10.1999
(51) Int. Cl.: A23G 1/20, A23G 3/02

(54) **Horizontal pouring machine**
Horizontalgiessanlage
Machine de coulée horizontale

(43) Date of publication of application: 25.04.2001
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 35260 Stadtallendorf (DE)
(72) Inventor: Giamello, Bruno, 12051 Alba (Cuneo) (IT)
(74) Representative: Gerbino, Angelo

(56) References cited:
- DE-A- 1 782 745
- DE-B- 1 126 230
- DE-C- 204 782
- DE-C- 447 881
- DE-C- 972 397
- FR-A- 666 753
- GB-A- 1 185 378
- US-A- 2 868 242
- US-A- 3 280 762
- US-A- 3 680 992
- US-A- 4 588 599

## Description

The present invention relates to a pouring machine according to the preamble to Claim 1. A machine of this type is known, for example, from DE-A-1 782 745.

The object of the present invention is to provide a machine of the type specified which is improved with regard to at least three different aspects:
- versatility, that is, the ability to provide a pouring machine which can pour different materials such as, for example, chocolate, creamy or paste-like substances, possibly containing grains, and liquids, etc., operating both to pour spots of material and to pour variously shaped strips or lines (so-called "tongues" of poured material), possibly with the machine also being adaptable to produce products of different sizes,
- metering accuracy, and
- hygiene, particularly with regard to the ability to avoid the inclusion of any air bubbles in the material poured, the ability to perform maintenance operations easily, and the ability to avoid even marginal exposure of operating parts of the machine (for example, the bearings, etc.) to the material being poured.

According to the present invention, this object is achieved by means of a machine having the specific characteristics recited in the appended claims.

In the currently preferred embodiment, the machine according to the invention is constituted by four main parts, that is, a support bench, a movable carriage mounted on the support bench with the ability to follow the moulds into which the pouring operation is to be performed, a metering tank in which the material to be poured is disposed (that is, the product to be poured, kept in motion by a stirrer), and a metering head with the respective valves and pistons.

All of these parts are preferably made of enamelled or stainless steel.

The pouring or metering unit can be replaced selectively in order to adapt the machine to the production of products of different sizes without changing the carriage, the kinematic control mechanisms or the control members. In particular, these latter elements may be produced with less stringent levels of accuracy than the metering unit, which is preferably produced with tighter tolerances. The metering unit is preferably equipped with a plurality of metering pistons. In particular, it is possible to use either a very large number of small-diameter pistons, or a small number of larger-diameter pistons so as to be able to pour either into moulds with a large number of cells, with very small doses or into moulds with few cells, with large doses. This adaptation of the machine to different types of production is thus achieved simply by changing the pouring plate and excluding a certain number of pistons or (for more significant changes in production) by changing the metering unit as a whole.

A machine with a high degree of versatility can thus be provided.

In the currently preferred embodiment, the machine according to the invention achieves a direct relationship between the pouring piston and the cell to be filled, avoiding the usual arrangement in which several pistons are used in parallel for metering the material to be poured into a certain number of cells, achieving a constant overall pumped quantity which, however, is not always distributed uniformly between the various cells; in fact if a pouring nozzle is blocked or soiled, larger quantities of material to be poured are invariably metered into the cells supplied by the other nozzles. The machine according to the invention preferably provides for the or each row of pistons (two rows of this type are preferably provided, operating in a "boxer" arrangement) to be controlled by a dedicated drive unit. When there are several rows of pistons, it is thus possible to cause only some of the rows (for example, one in two) to operate, whilst the remaining row or rows are kept deactivated, for example, because the respective cells into which the pouring is to be performed are not available at the time in question (a missing pouring mould or a missing product to be filled). The pouring operation can also be differentiated (in terms of quantity of material to be poured metered) from one row to another. The pistons of the or each row are preferably actuated by connecting-rod and crank mechanisms with oscillatory motion which act on a plate to which the proximal ends of the pistons of a row are articulated. By virtue of the articulated mounting, it is possible to compensate for any misalignments of the pistons relative to the respective cylinders, for assembly tolerances, and for thermal expansion. This prevents ovalization of the cylinders, seizing of the pistons, and uneven wear of any seals and of the cylinders, which could result in loss of product due to leakage. As already stated, the pistons which are not required can be excluded from the row, the number of operative pistons being adjusted to the number of cells to be filled.

As result, high levels of metering accuracy, combined with a high degree of flexibility in performing the operation, can be achieved.

Still in the currently preferred embodiment, the machine according to the invention comprises, as a stirrer associated with the tank in which the material to be poured is disposed, a stirrer with a swinging motion, the blade of which does not emerge from the material, so that the inclusion of any air bubbles is prevented. The respective support bearings are outside the tank, and the stirring unit can easily be removed for cleaning since it is not subject to leakages because it has no seals. The speed of the stirrer can be varied selectively according to the product processed. The particular shape of the blade ensures an absence of stagnation and, at the same time, avoids shielding of the intake openings of the pistons. Leakage of product at the ends of the metering valves may be prevented by suitable seals. The materials used which come into contact with the product are compatible with food products and, in any case, the external surfaces of the tank and of the jacket are machined so as to be easy to clean. The tank, complete with pistons, jackets, valves and stirrer, can be moved towards one side of the machine (the operator side) for cleaning or maintenance operations. For this purpose, the tank can slide on two rails fixed to the carriage and arranged transversely relative to the machine.

A jacketed and heated tank is advantageously provided in the lower portion of the carriage so that test pourings can be performed, in the absence of moulds, possibly under manual control, and the product can easily be collected. This avoids the presence of unhygienic collection pans which in any case constitute elements which are difficult to render hygienic.

The invention will now be described, purely by way of nonlimiting example with reference to the appended drawings, in which:
- Figure 1 is a general side elevational view of a pouring machine according to the invention,
- Figure 2 is a view substantially corresponding to the view of Figure 1, reproduced on a slightly enlarged scale, and limited to the upper portion of the assembly visible in Figure 1 and, moreover, with some parts cut away/sectioned for greater clarity of illustration,
- Figure 3 is a general front elevational view of the machine of the previous drawings,
- Figure 4 is a view showing the portion of Figure 2 indicated by the arrow IV, on an enlarged scale, and in a different operating position from that shown in Figure 2, and
- Figure 5 is a view showing further components of the machine of the previous drawings, on an enlarged scale.

A pouring machine according to the invention, generally indicated 1 in the appended drawings, is intended, in the embodiment illustrated, to be used for materials to be poured constituted by food substances in a fluid or semi-fluid state. Typically, these are food products such as chocolate, creamy or paste-like filling substances, possibly containing grains or liquids, liquids such as syrups, etc. As stated, an important characteristic of the machine according to the invention is its versatility: clearly, however, the specific characteristics of the products which are poured do not greatly affect the characteristics of the machine.

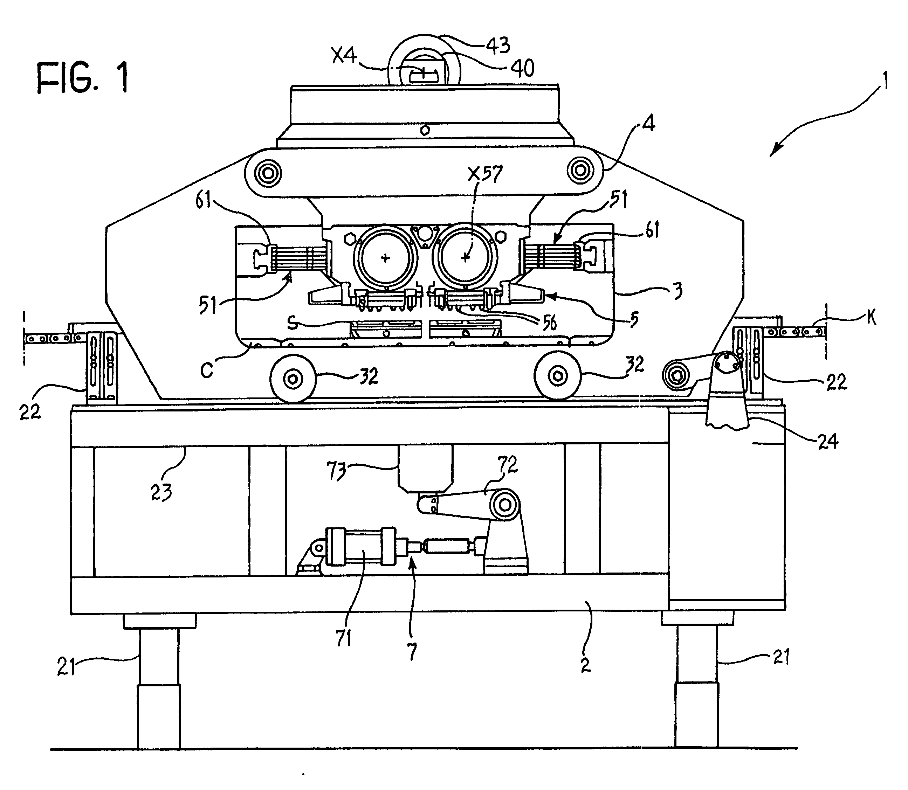

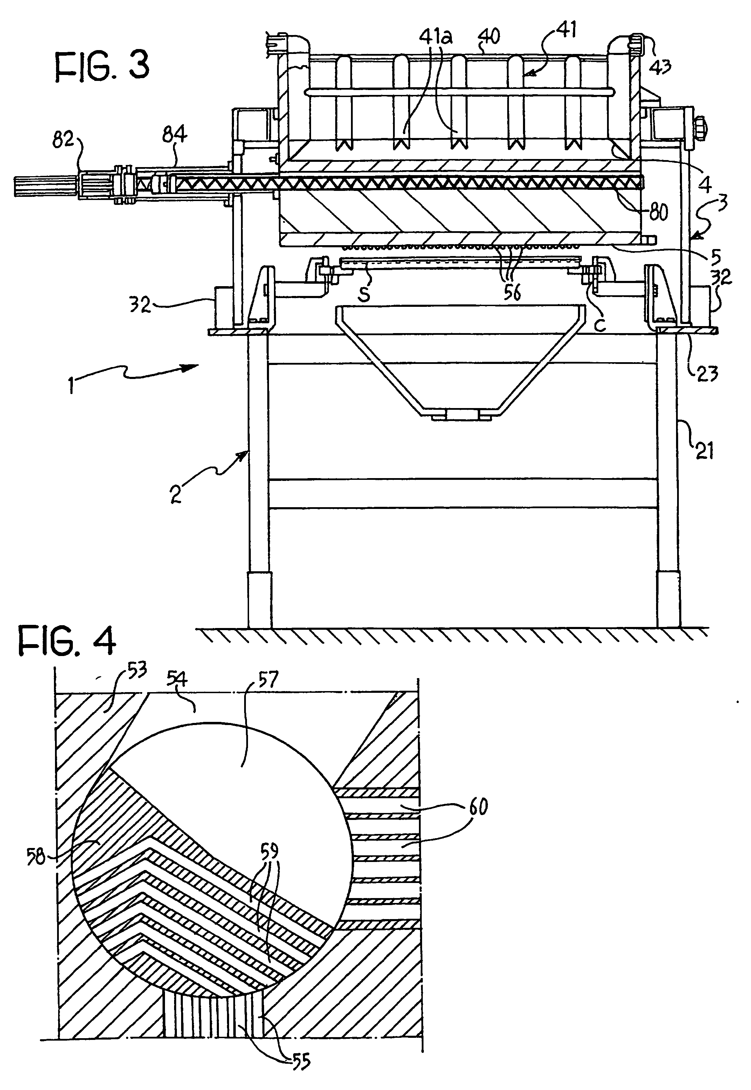

In the embodiment shown, the machine 1 is intended to pour a food product in a fluid state into products disposed in moulds S which are advancing horizontally (from left to right with reference to the observation point of the drawings) on a conveyor C. This may, for example, be a motor-driven chain conveyor (part of the drive chain of the conveyor, indicated K, is visible in Figures 1 and 2).

By way of indication - but without limiting the scope of the invention - the products in question may be constituted, for example, by hemispherical wafers which are to receive a mass of chocolate-flavoured filling cream in their interiors as a result of the pouring operation performed in the machine 1. The products into which the pouring operation is to be performed are located in respective cells of the moulds and, naturally, the pouring operation has to be performed in an aimed manner, so that a respective metered quantity of filling material reaches the interior of each cell in centred conditions.

Moulds of this type and respective conveyor systems (and turning and closing systems) are known in the art, as is shown, for example by EP-A-0 083 324, EP-A-0 583 739 or EP-A 0 583 740.

The material could, however, be poured into pouring sites other than the cells of the moulds S, for example, directly into the moulds, in order to form solid bodies such as chocolates, meringues, etc., or directly onto products to be decorated, for example, with strips of chocolate or cream.

In the embodiment illustrated, the machine 1 is composed basically of four main parts, that is:
- a support bench 2,
- a carriage 3 mounted on the bench 2 with the ability to perform a to-and-fro movement in alignment with the direction of advance of the moulds S on the conveyor C,
- a container in the form of a metering tank 4 which is carried by the carriage 3 in a position above the path of advance of the moulds S, and
- a metering unit 5 situated beneath the tank 4 and above the path of movement of the moulds S.

The support bench 2 is constituted by a solid metal structural framework having supporting legs 21 and carrying, on an upper side, possibly in addition to bracket-like elements 22 for supporting the conveyor C, a set of horizontal guides 23 on which the carriage 3 is mounted for moving to and fro. The guides 23 are preferably located beneath the path of advance of the moulds S on the conveyor C.

The carriage 3 has lower revolving bodies such as wheels or rollers 32. This naturally represents only one of the many possible functionally equivalent selections which will be clear to an expert in the art and are not described further since they are obvious for the purposes of the present invention.

The to-and-fro movement of the carriage 3 on the bench 2 is brought about by a connecting-rod and crank unit 24 driven by a motor disposed inside the bench and hence not explicitly shown in the drawings. The unit 24 may advantageously be operated in the manner described in EP-A-0 614 733, that is, in a manner such that the carriage 3 can move at constant speed, following the moulds S in which the pouring is being performed.

In an embodiment which is less preferred, for reasons which will become clear from the following, the carriage 3 could simply be an upper extension of the bench 2 which is fixed and hence not movable relative to the bench 2.

The upper portion of the carriage 3 (whether it is movable or fixed) has a portal-like structure (see Figure 3) the reason for which is that the conveyor C and the flow of moulds S carried thereby must clearly be able to pass longitudinally through the carriage 3 with the tank 4 situated in an upper position.

The tank 4 is preferably in the form of a body with a substantially semicylindrical inner surface (see the cut-away view in the top part of Figure 2) having a motor-driven shaft 40 disposed on the principal axis X4 of the semicylindrical surface. The shaft 40, which is driven by a motor not directly visible in the drawings, performs a reciprocating rotary movement which can be translated into a corresponding swinging movement of a stirrer blade 41. The blade 41 preferably has a reticular structure which ensures an absence of stagnation in the material to be poured to be admitted to the tank 4 (in accordance with known criteria).

The tank 4 may also have heating means, for example, in the form of electrical resistors, preferably arranged (in various locations in the tank) inside a mono-tubular jacket, preferably of steel, incorporated in the cast body of the tank 4 which is preferably in the form of a single hard aluminium body. This selection means that, during the production of the tank 4, the molten aluminium is distributed in an optimal manner between the turns of the tubes in which the heating resistors are located, thus achieving optimal heat-exchange conditions.

It is possible, at least in principle, to consider also providing heating elements within the blade 41.

The swinging movement of the blade 41 in the tank 4 is performed in accordance with a general criterion of symmetry about a central vertical position shown in continuous outline in Figure 2.

One of the end positions reached by the blade 41 in the above-mentioned swinging movement is shown in broken outline in the same drawing. The opposite end position is not shown but is symmetrical with that shown in broken outline, with respect to the central vertical position.

This selection is connected with the fact that the tank 4 shown in the embodiment illustrated is intended to serve two rows of pistons 51 included in the pouring unit 5. This takes place through two respective openings 42 (only one of these is shown specifically in Figure 2), extending along two generatrices of the otherwise continuous semicylindrical surface defining the internal shape of the tank. The openings 42 are preferably located in symmetrical positions with respect to the central vertical position of the swinging movement of the blade 41.

Although this arrangement is preferred, it is not essential. The tank 4 could in fact have a different number of openings 42 for the supply of the product poured towards the pouring unit 5.

To give a clear example, the tank 4 could have a single opening of this type, located in its lowest portion, along one of the generatrices of the semicylindrical surface defining the internal cavity of the tank. In the embodiment described herein, the openings 42 are in the form of slots which extend continuously along the extent of the tank 4. Naturally, the openings 42 in question could actually be constituted by several separate openings aligned along the internal surface of the tank. This solution may be adopted, for example, when a larger number of rows of pistons, for example, four separate rows arranged in opposed pairs at the longitudinal ends of the tank 4, are to be served.

In any case, the blade 41 can preferably sweep at least the region in which the opening or openings 42 are disposed with its distal end 41a which moves in the vicinity of the internal surface of the tank 4. Any stagnation or blockages of the openings 42 by the material to be poured are thus avoided.

The bearings 43 which support the blade 41 (in particular the shaft 40) are outside the tank. This arrangement, in combination with the fact that the movement of the blade 41 is regulated in a manner such that the blade does not emerge from the product (thus preventing the inclusion of bubbles) is advantageous for hygiene purposes.

It will also be appreciated that the stirrer unit described does not require the use of seals and can easily be removed from the tank 4 for cleaning and maintenance operations.

The pouring unit 5 extends generally horizontally. In the embodiment illustrated, the unit 5 comprises two rows of pistons 51 each served by one of the openings 42 in the lower portion of the tank 4. This is in accordance with an arrangement which - with reference to the conventional terminology in the field of internal combustion engines - can be defined as a "boxer" arrangement. This is basically an opposed arrangement which is generally reflectively symmetrical with respect to the imaginary vertical and transverse median plane of the carriage 3 (in practice the imaginary vertical transverse plane of the carriage 3 extending through the axis X4 about which the swinging of the blade 41 takes place). The following description will refer explicitly to only one of the rows 51 in question, upon the assumption that the other row is structurally identical, still with reflective symmetry. It should, however be pointed out once again that the arrangement according to the invention is in no way limited to the presence of only one or two rows of pistons. There may in fact be any number of rows of pistons. The description given below therefore relates to the structure of one of the rows which may be reproduced in identical or almost identical manner for any number of rows.

The generally horizontal shape of the row of pistons 51 is due to the fact that the pistons extend and move horizontally and hence transversely relative to the pouring movement of the product collected in the tank 4 (which takes place vertically).

For this purpose, the pouring unit comprises, for each row of pistons 51, a head 53 (a separate head for each row of pistons or a head common to several rows of pistons) having an upper opening 54 connected to the or a respective opening 42 in order to receive the material to be poured which falls from the tank 4, and a plurality of downwardly-facing metering ducts 55, each communicating with a respective pouring nozzle 56. The latter is intended to direct the material to be poured into a respective cell of the mould S located in an underlying position at the time in question, preferably in conditions of zero relative movement owing to the general movement of the carriage 3 which follows the moulds S. It will, however, be appreciated that the capability - of the carriage 3 and hence of the nozzles 56 carried thereby - to follow the moulds S constitutes a selection which is preferred but not essential for the purposes of the implementation of the invention. The structure of the pouring tank 4 and of the pouring unit 5 may also be used within a fixed machine, that is, a machine in which the carriage 3 does not move relative to the bench 2 but constitutes a portion which is fixed to the bench 2. Naturally, if this solution is adopted, it is necessary to arrange for the movement of the conveyor C to stop during the pouring operations so that the moulds S into which the pouring is performed are kept temporarily stationary relative to the nozzles 56.

The preferred embodiment, which provides for the carriage 3 to follow the movement of the moulds S is advantageous since it is possible to operate whilst the moulds S are kept in continuous movement and hence without the need to provide for the conveyor C to stop upon each pouring operation. Naturally, it is also possible to arrange for the pouring operation to be accompanied by a controlled relative movement between the nozzles 56 and the moulds S to as to produce a poured "tongue".

With reference once more to the structure of the pouring unit, the product in the fluid state which is in the tank 4 tends to flow by gravity from the tank through the openings 42 and 54 and the ducts 55 towards the nozzles 56. This movement is controlled by a rotary distributor unit (which is called a "valve" for brevity and is visible in greater detail in Figure 4) mounted in a cylindrical cavity 57, preferably with a horizontal axis, formed in the head 53 in an intermediate position between the opening 54 and the ducts 55.

It should be noted once more that the description given herein relates to a single row of pistons 51.

The distributor or valve is constituted by an approximately semicylindrical body 58 which is disposed inside the cavity 57 and can rotate with a reciprocating motion about the principal axis X57 of the cavity 57. This movement is performed under the action of respective drive means not shown specifically in the drawings, but of known type.

A plurality of angled ducts 59 extend through the body of the valve 58 and have the function of putting the ducts 55 which supply the material to be poured towards the nozzles 56 selectively into communication with the individual cylinders 60 in which the pistons 51 act. Specifically, at least a portion (that indicated 59) of each pouring duct extends through the closure element 58 which has two rows of holes for communication of the said portions of the ducts with the pouring nozzles 56 and with the cylinders 60 in which the pistons 51 move. The rows of holes are located in positions approximately perpendicular to the axis X57.

In particular, the valve 58 can be oriented to and fro between two operating positions.

The first position may be defined as a loading position, that is, a pouring preparation position. This is the position shown in greater detail in Figure 4, in which the valve 58 is arranged in a manner such as to put the cylinders 60 into communication with the upper portion of the cavity 57 left free by the valve 58, which is disposed substantially in the lower portion thereof. The material to be poured coming from the tank 4 (through the openings 42 and 54) can thus be drawn into the cylinders 60 by the pistons 51 which are retracted into the cylinders 60, moving from left to right with reference to the row of pistons 51 shown in detail in the right-hand portion of Figure 2.

The second position, which may be defined as the pouring position, is shown in Figure 2. In this position, the valve 58 is oriented in a manner such that each of the ducts 59 is in communication at one end (the lower end) with a respective duct 55 and the respective pouring nozzle 56 and, at the opposite end (generally at the side of the cavity 57), with a respective cylinder 60 in which the corresponding piston 51 advances. The magnitude of the respective forward stroke determines very precisely, in dependence on the cross-section of the respective cylinder 60, the quantity of pouring product expelled through the nozzles 56.

It will be appreciated that, after a few starting cycles to allow the ducts described to be filled, the material to be poured fills the ducts 59, the ducts 55 (and their extensions towards the nozzles 56) as well as the portions of the cylinders 60 which face towards the cavity 57 and are left free by the pistons 51 at the time in question.

The retraction of the pistons 51 with the valve 58 in the position shown in Figure 4 has the function of refilling these portions of the cylinders 60. When the operating condition shown in Figure 2 has been re-established, the volume of product poured through each nozzle 56 thus corresponds precisely to the volume of the longitudinal portion of the corresponding cylinder 56 involved in the forward stroke of the respective piston 51.

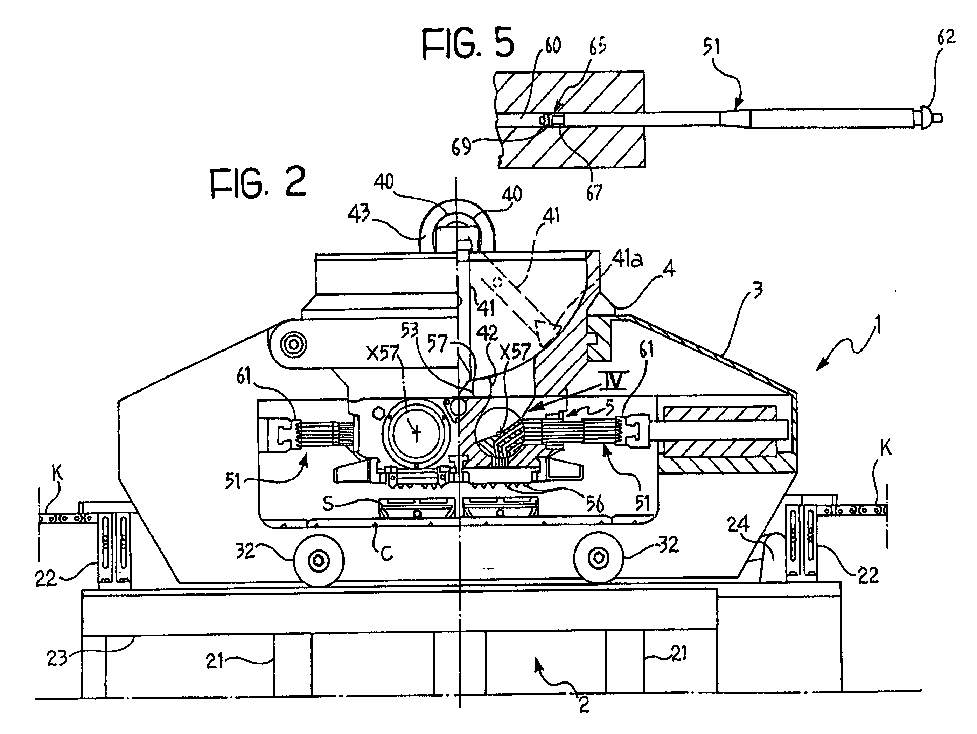

In the embodiment described herein, which is intended to supply a fairly large number of nozzles 56, the pistons 51 are in the form of almost needle-like rods articulated at their generally hemispherical proximal ends 62 (see Figure 5) to a support plate 61. This plate is movable to and fro horizontally like a slide by virtue, for example, of its connection to a connecting-rod and crank unit driven by a corresponding motor situated in a generally outer position relative to the carriage 3. Naturally, this is only one of the many possible functionally equivalent selections which will be clear to an expert in the art and are not described further or illustrated in the drawings since they are obvious for the purposes of the present invention.

The distal end 65 of each piston has a portion covered by a bush 67 extending axially and made of yielding material, for example plastics material, and is provided with a seal 69.

In the first place, the arrangement shown enables an identical stroke to be achieved for all of the pistons 51, ensuring a high degree of uniformity of the pouring operation in the various nozzles 56 regardless of the presence of any traces of material on one or more nozzles 56, and also strongly opposes the possible occurrence of blockages.

In the second place, the articulation of the proximal ends 62 of the pistons 51 to the plate 61 and the presence of the bushes 67 on their distal ends 65 permits a floating mounting of the pistons 51 and their automatic adjustment to the profiles of the cylinders 60. In particular, this compensates for any misalignment of the pistons 51 relative to the respective cylinders 60, for assembly tolerances, and for thermal expansion. This prevents ovalization of the cylinders 60, seizing of the pistons 51, and possible wear with resulting losses of product due to leakage.

It is also possible to vary the number of active pistons 51 specifically as well as their distribution on the plate 61 so as to be able to serve only some of the nozzles 56 without the need to modify the other parts of the machine.

Although the orientation movement of the valve 58 and the to-and-fro movement of the pistons 51 have to be coordinated, they do not necessarily have to be strictly interlinked.

It is not in fact essential for each orientation movement of the valve 51 between the positions shown in Figures 2 and 4 and *vice versa* to correspond to a full outward and return movement of the pistons 51 inside the cylinders 60.

It is in fact possible to load a specified quantity of product to be poured into the cylinders 60 by arranging the valve 58 in the position shown in Figure 4 and then retracting the pistons 51 into the cylinders 60. Once the valve 58 has been returned to the position shown in Figure 2, this then permits subsequent pouring operations. Each of these is brought about by advancing the pistons 51 inside the cylinders 60 by a specific fraction of their maximum forward stroke, with a return to the loading position of Figure 4 only after several pouring operations have been performed in succession (in practice, when there is no longer sufficient material to be poured available in the cylinders 60).

This capability is important since it enables different quantities of the product to be poured to be supplied at different times, for example, by means of an electronic drive system applied to the means for operating the pistons 51, without the need to alter the respective regulating geometry.

Moreover, with the use of a machine of the type described herein comprising several rows of pistons 51, the presence of separate drive units for the respective actuation means enables, for example, a pouring operation to be performed in only one of the moulds S served at the time in question, by at least momentary interruption of the pouring operation in the other row of pistons 51 (for example, if the respective mould S is accidentally missing or the products to be filled are not present in the mould). Moreover, the two rows of pistons 51 can be controlled in a manner such that they meter different quantities of products through their respective nozzles 56 into different moulds S which are in the pouring region at the time in question.

The embodiment described herein relates to the presence of two moulds S each of which is arranged, as a result of the transportation by the conveyor C, beneath one of the two rows of pistons 51.

The lower portion of Figure 1 shows the (optional) possibility of providing the machine 1 with a device 7 which can temporarily lift the mould or moulds S undergoing a pouring operation at the time in question.

In the embodiment shown, this lifting unit is controlled by an actuator 71 such as, for example, a fluid jack, which acts by means of a set of transmission levers (for example a so-called L-shaped joining plate 72) on a lifting unit 73 - of known type shown only partially in the drawings - which can act from below on the two moulds S which are aligned with the pouring unit 5 at the time in question in order to bring about a small lifting travel thereof, relative to the conveyor C.

Likewise not illustrated is the presence, in the lower portion of the carriage 3, of a jacketed and heated vessel which enables test pourings to be performed in the absence of moulds S, possibly under manual control (usually with the carriage 3 stationary, even when it is configured to be moved), so that the product can easily be collected and the presence of collecting pans which may represent critical elements with regard to the hygiene of the machine is avoided. For this purpose, the unit 7 for lifting the moulds is preferably formed so as to act on the conveyor C laterally, for example, on its chains K, so that the upper portion of the vessel for recovering the product is left completely free.

It will be appreciated that the movement of the carriage 3 may be interlinked with the advancing movement of the conveyor C (in known manner) either in a manner such as to achieve an absence of relative movement between the pouring nozzles 56 and the underlying regions (for example, the cells) into which they pour the product subjected to pouring, or with provision for a controlled offset such that, during the pouring operation, the nozzles 56 move slightly longitudinally relative to the respective pouring sections so as not to pour spots but to pour a line or "tongue" of material to be poured.

The pouring unit and the tank also have means (Figure 3) for movement in a direction substantially perpendicular both to the direction of sliding of the pistons 51 and to the direction in which a metered quantity of the material to be poured is expelled through the respective pouring nozzle 56 and thus, in particular, along an axis lying in a horizontal plane and perpendicular to the path of advance of the carriage 3. In detail, these movement means comprise a screw 80 which has drive means 82 and can rotate in an internally threaded element 84 fixed to the carriage 3. A reciprocating rotary movement of the screw 80 will thus bring about a reciprocating translational movement of the tank 4 and of the pouring unit of the nozzles 56. It will thus be possible to achieve an undulating shape of the so-called "tongues" of material to be poured when there is relative longitudinal movement between the pouring nozzles 56 and the underlying regions, or to produce "tongues" extending rectilinearly transverse the path of movement of the carriage 3 when there is no relative longitudinal movement.

Naturally, the principle of the invention remaining the same, the details of construction and forms of embodiment may be varied widely with respect to those described and illustrated, without thereby departing from the scope of the present invention as defined by the appended claims.

## Claims

1. A pouring machine for supplying metered quantities of a material to be poured, comprising:
- a support framework (2, 3),
- a container (4) which is associated with the framework and can receive a filling of material to be poured,
- a pouring unit (5) having a plurality of pouring ducts (55, 59, 60) which can receive the material to be poured from the container (4) and which have respective pouring nozzles (56) associated with their lower ends,
- at least one set of pistons (51) arranged side by side and each mounted for sliding in a respective cylinder (60), the sliding movement of each piston (51) in the respective cylinder (60) causing the expulsion of a metered quantity of material to be poured through a respective pouring nozzle (56), and
- actuator means for bringing about the sliding movement of the pistons (51) inside the cylinders (60),
the machine being **characterized in that**
each piston (51) has a proximal end (62) articulated to a plate (61) slidable by the actuator means, and a distal end (65) a portion of which is covered by a bush (67) extending axially and made of yielding material, so that the pistons are mounted in a floating manner.

2. A machine according to Claim 1, **characterized in that** a stirrer member (41) is associated with the container (4) and can remain continuously immersed in the material to be poured so that the material to be poured can be stirred for delivery to the pouring unit (5).

3. A machine according to Claim 2, **characterized in that** the stirrer member (41) comprises a blade which can perform a swinging movement about a substantially horizontal oscillation axis (X4).

4. A machine according to Claim 3, **characterized in that** the container (4) is in the form of a substantially semicylindrical tank the central axis (X4) of which constitutes the oscillation axis of the swinging movement of the blade.

5. A machine according to any one of the preceding claims 2 to 4, **characterized in that** the stirrer member (41) has associated drive means located in a position substantially outside the container (4).

6. A machine according to any one of preceding Claims 2 to 5, **characterized in that** the blade (41) has a distal end (41a) which, as a result of the swinging movement, moves in the vicinity of the wall of the container (4) which comprises at least one opening (42) for communication with the pouring unit (5), the at least one opening being swept by the distal end (41a) of the blade (41) during the swinging movement.

7. A machine according to any one of the preceding claims 2 to 6, **characterized in that** the stirrer member (41) is mounted so as to be removable from the container (4) to facilitate cleaning and maintenance operations.

8. A machine according to any one of the preceding claims, **characterized in that** the pistons (51) and the respective cylinders (60) extend substantially horizontally and transversely relative to the path of supply of the material to be poured from the container (4) towards the pouring nozzles (56), and **in that** the pouring unit (5) comprises, in a position between the container (4) and the pouring nozzles (56), a movable closure element (58) defining at least one portion (59) of each pouring duct (55, 59, 60), the closure element (58) being orientable selectively between:
- a pouring preparation position in which the closure element (58) leaves the cylinders (60) exposed to communication with the container (4) and the pistons (51) can draw corresponding quantities of the material to be poured into the cylinders (60) by sliding in the respective cylinders (60) in a first direction, and
- a pouring position, in which the said portions of the pouring ducts (59) provided in the closure element (58) are put into communication with respective cylinders (60) of the pistons (51) and respective pouring nozzles (56) and the pistons (51) can bring about the expulsion of corresponding metered quantities of material to be poured through the pouring nozzles (56) by sliding in the respective cylinders (60) in a second direction.

9. A machine according to any one of the preceding claims, **characterized in that** the actuator means cause the plate (61) to move in the manner of a slide slidable along an axis having the orientation common to the pistons (51).

10. A machine according to any one of preceding claims 8 to 9, **characterized in that** the actuator means comprise a motor-driven connecting-rod and crank unit which can bring about the movement of the plate which is slidable like a slide in the first and second directions.

11. A machine according to any one of preceding claims 8 to 10, **characterized in that** the actuator means are configured for selectively causing the pistons (51) to slide in the second direction with selectively variable sliding strokes in order to vary selectively the corresponding quantity of material to be poured expelled through the pouring nozzles (56).

12. A machine according to any one of the preceding claims, **characterized in that** the pistons (51) of the set are mounted on the support plate (61) in a selectively removable manner.

13. A machine according to any one of preceding claims 8 to 12, **characterized in that**:
- the pouring unit (5) comprises a cylindrical cavity (57) with a respective principal axis (X57),
- the closure element (58) is constituted by a body through which the at least one portion (59) of each pouring duct (55, 59, 60) extends and which is mounted in the cavity (57) with the ability to rotate about the principal axis (X57), the pouring preparation position and the pouring position corresponding to two different angular positions of the rotary movement about the principal axis (X57).

14. A machine according to Claim 13, **characterized in that** the closure element (58) is substantially semicylindrical with the said portions (59) of the pouring ducts having two rows of holes for communication with the pouring nozzles (56) and with the cylinders (60), respectively, the two rows of holes being located in positions substantially perpendicular to the principal axis (X57).

15. A machine according to any one of the preceding claims, **characterized in that** it comprises a plurality of sets of pistons (51) each set being able selectively to control the metering of the material to be poured from the container (4) towards a respective set of pouring nozzles (56).

16. A machine according to Claim 15, **characterized in that** separate actuator means are provided for the pistons (51) included in each of the sets of the plurality, each set of pistons (51) being operable independently of the other sets of pistons (51).

17. A machine according to any one of the preceding claims, **characterized in that** the container (4) is located in a position above the pouring unit (5).

18. A machine according to claim 17, **characterized in that** the container (4) is selectively removable from the support framework (2, 3).

19. A machine according to any one of the preceding claims, **characterized in that** the support framework (2, 3) comprises a support bench (2) defining a substantially horizontal path of movement for pouring sites (S) which can receive material to be poured expelled from the nozzles (56) with the container (4) and the pouring unit (5) located above the path.

20. A machine according to Claim 19, **characterized in that** it further comprises, associated with the bench (2), a lifting unit (7) which can selectively perform a movement to lift the pouring sites (S) towards the pouring nozzles (56).

21. A machine according to Claim 19 or Claim 20, **characterized in that** the framework comprises a carriage (3) mounted for sliding on the bench (2) along the path, with at least the pouring unit (5) mounted on the carriage (3).

22. A machine according to Claim 21, **characterized in that** the container (4) is also mounted on the carriage (3).

23. A machine according to any one of the preceding claims, **characterized in that** at least the pouring unit (5) has means for movement along an axis substantially perpendicular both to the axis of sliding of the pistons (51) and to the axis along which a metered quantity of material to be poured is expelled through the respective pouring nozzle (56).

24. A machine according to Claims 21 and 23, **characterized in that** the means for moving the pouring unit (5) along an axis substantially perpendicular both to the axis of sliding of the pistons (51) and to the axis along which a metered quantity of the material to be poured is expelled through the respective pouring nozzle (56) comprise a screw (80) associated with the pouring unit (5), the screw having drive means (82) and being rotatable in a female threaded member (84) fixed to the carriage (3).

25. A machine according to any one of preceding claims 21 to 24, **characterized in that** respective drive means (24) are associated with the carriage (3) for imparting to the carriage (3) a to-and-fro movement relative to the bench (2) along the path.

26. A machine according to Claim 25, **characterized in that** the respective drive means (24) are configured for bringing about the movement of the carriage (3) at constant speed in one direction of the to-and-fro movement.

## Patentansprüche

1. Eine Gießanlage zum Bereitstellen dosierter Mengen eines zu gießenden Materials, umfassend:
- einen Stützrahmen (2, 3),
- einen Behälter (4), der mit dem Stützrahmen verbunden ist und der eine Füllung eines zu gießenden Materials aufnehmen kann,
- eine Gießeinheit (5), die eine Vielzahl von Gießkanälen (55, 59, 60) aufweist, die das zu gießende Material aus dem Behälter (4) aufnehmen können und die jeweils Gießdüsen (56) aufweisen, die mit den unteren Enden der Gießkanäle verbunden sind,
- mindestens einen Satz Kolben (51), die nebeneinander angeordnet sind und von denen jeder so gelagert ist, dass er jeweils in einem Zylinder (60) gleiten kann, wobei die Gleitbewegung jedes Kolbens (51) in dem jeweiligen Zylinder (60) das Austreiben einer dosierten Menge des zu gießenden Materials durch eine jeweilige Gießdüse (56) bewirkt, und
- Betätigungsmittel zum Bewirken der Gleitbewegung der Kolben (51) innerhalb der Zylinder (60),
wobei die Anlage **dadurch gekennzeichnet ist, dass** jeder Kolben (51) ein näheres Ende (62), das an einer durch die Betätigungsmittel gleitend bewegbaren Platte (61) angelenkt ist, und ein ferneres Ende (65), von dem ein Abschnitt durch eine sich axial erstreckende und aus einem nachgiebigen Material bestehende Buchse (67) bedeckt ist, aufweist, so dass die Kolben gleitend gelagert sind.

2. Eine Anlage gemäß Anspruch 1, **dadurch gekennzeichnet, dass** ein Rührelement (41) mit dem Behälter (4) verbunden ist und durchgehend in dem zu gießenden Material eingetaucht verbleiben kann, so dass das zu gießende Material zur Beschickung der Gießeinheit (5) gerührt werden kann.

3. Eine Anlage gemäß Anspruch 2, **dadurch gekennzeichnet, dass** das Rührelement (41) eine Schaufel umfasst, die eine schwingende Bewegung um eine im Wesentlichen horizontale Schwingungsachse (X4) ausführen kann.

4. Eine Anlage gemäß Anspruch 3, **dadurch gekennzeichnet, dass** der Behälter (4) in der Form eines im Wesentlichen halbzylindrischen Tanks ausgebildet ist, dessen zentrale Achse (X4) die Schwingungsachse der schwingenden Bewegung der Schaufel ausbildet.

5. Eine Anlage gemäß einem der vorstehenden Ansprüche 2 bis 4, **dadurch gekennzeichnet, dass** das Rührelement (41) mit diesem verbundene Antriebsmittel aufweist, die im Wesentlichen außerhalb des Behälters (4) angeordnet sind.

6. Eine Anlage gemäß einem der vorstehenden Ansprüche 2 bis 5, **dadurch gekennzeichnet, dass** die Schaufel (41) ein ferneres Ende (41a) aufweist, das sich, als Folge der schwingenden Bewegung, in der Nähe der Wand des Behälters (4) bewegt, wobei die Wand mindestens eine Öffnung (42) zur Verbindung mit der Gießeinheit (5) aufweist, wobei die mindestens eine Öffnung von dem ferneren Ende (41a) der Schaufel (41) während der schwingenden Bewegung überstrichen wird.

7. Eine Anlage gemäß einem der vorstehenden Ansprüche 2 bis 6, **dadurch gekennzeichnet, dass** das Rührelement (41) so angebracht ist, dass es von dem Behälter (4) entfernbar ist um Reinigungs- und Wartungsarbeiten zu erleichtern.

8. Eine Anlage nach einem der vorstehenden Ansprüche, **dadurch gekennzeichnet, dass** sich die Kolben (51) und die jeweiligen Zylinder (60) im Wesentlichen horizontal und quer relativ zu der Zuführungsbahn des zu gießenden Materials von dem Behälter (4) zu den Gießdüsen (56) erstrecken, und dass die Gießeinheit (5) an einer Position zwischen dem Behälter (4) und den Gießdüsen (56) ein bewegliches Verschlusselement (58) umfasst, das mindestens einen Abschnitt (59) jedes Gießkanals (55, 59, 60) festlegt, wobei das Verschlusselement (58) wahlweise orientierbar ist zwischen:
- einer Position zur Vorbereitung des Gießens in dem das Verschlusselement (58) die Zylinder (60) in Verbindung mit dem Behälter (4) hält und die Kolben (51) die entsprechenden Mengen des zu gießenden Materials **dadurch** in die Zylinder (60) ziehen können, dass sie in den jeweiligen Zylindern (60) in einer ersten Richtung gleiten, und
- einer Position zum Gießen, in der die in dem Verschlusselement (58) vorgesehenen Abschnitte der Gießkanäle (59) in Verbindung mit den jeweiligen Zylindern (60) der Kolben (51) und den jeweiligen Gießdüsen (56) gebracht werden und die Kolben (51) die Austreibung entsprechend dosierter Mengen des zu gießenden Materials durch die Gießdüsen (56) **dadurch** bewirken können, dass sie in den jeweiligen Zylindern (60) in einer zweiten Richtung gleiten.

9. Eine Anlage gemäß einem der vorstehenden Ansprüche, **dadurch gekennzeichnet, dass** die Betätigungsmittel die Platte (61) dazu bringen sich wie ein Schlitten entlang der Achse, die die gleiche Orientierung wie die Kolben (51) aufweist, zu gleiten.

10. Eine Anlage gemäß einem der vorstehenden Ansprüche 8 bis 9, **dadurch gekennzeichnet, dass** die Betätigungsmittel eine motorgetriebene Schubstange und eine Kurbeleinheit umfassen, die die Bewegung der Platte, die wie ein Schlitten in erste und zweite Richtungen gleiten kann, bewirken können.

11. Eine Anlage gemäß einem der vorstehenden Ansprüche 8 bis 10, **dadurch gekennzeichnet, dass** die Betätigungsmittel so ausgebildet sind, dass sie bewirken, dass die Kolben (51) wahlweise mit wahlweise unterschiedlichen Gleithüben in die zweite Richtung gleiten, um wahlweise die entsprechende Menge des durch die Gießdüsen (56) auszutreibenden, zu gießenden Materials zu variieren.

12. Eine Anlage gemäß einem der vorstehenden Ansprüche, **dadurch gekennzeichnet, dass** die Kolben (51) des Satzes an einer Stützplatte (61) in einer wahlweise entfernbaren Weise montiert sind.

13. Eine Anlage gemäß einem der vorstehenden Ansprüche 8 bis 12, **dadurch gekennzeichnet, dass**:
- die Gießeinheit (5) einen zylindrischen Hohlraum (57) mit einer zugehörigen ersten Achse (X57) umfasst,
- das Verschlusselement (58) durch einen Körper ausgebildet ist, durch den sich zumindest ein Abschnitt (59) jedes Gießkanals (55, 59, 60) erstreckt und der in dem Hohlraum (57) mit dem Vermögen um die erste Achse (X57) zu rotieren, gelagert ist, wobei die Position zur Vorbereitung des Gießens und die Position zum Gießen zwei unterschiedlichen Winkelpositionen der Drehbewegung um die erste Achse (X57) entsprechen.

14. Eine Anlage gemäß Anspruch 13, **dadurch gekennzeichnet, dass** das Verschlusselement (58) im Wesentlichen halbzylindrisch ausgebildet, wobei die Abschnitte (59) der Gießkanäle zwei Reihen von Öffnungen, jeweils zur Verbindung mit den Gießdüsen (56) und mit den Zylindern (60), aufweisen, wobei die zwei Reihen von Öffnungen in Positionen, die im Wesentlichen senkrecht zu der ersten Achse (X57) liegen, angeordnet sind.

15. Eine Anlage gemäß einem der vorstehenden Ansprüche, **dadurch gekennzeichnet, dass** sie eine Vielzahl von Sätzen von Kolben (51) aufweist, wobei jeder Satz wahlweise die Dosierung des zu gießenden Materials von dem Behälter (4) zu einem entsprechenden Satz Gießdüsen (56) kontrollieren kann.

16. Eine Anlage gemäß Anspruch 15, **dadurch gekennzeichnet, dass** getrennte Betätigungsmittel für die Kolben (51) bereit gestellt werden, die in einem Satz der Vielzahl der Kolben umfasst sind, wobei jeder Satz Kolben (51) unabhängig von den anderen Sätzen Kolben (51) betreibbar ist.

17. Eine Anlage gemäß einem der vorstehenden Ansprüche, **dadurch gekennzeichnet, dass** der Behälter (4) in einer Position über der Gießeinheit (5) angeordnet ist.

18. Eine Anlage gemäß Anspruch 17, **dadurch gekennzeichnet, dass** der Behälter (4) wahlweise von dem Stützrahmen (2, 3) entfernbar ist.

19. Eine Anlage gemäß einem der vorstehenden Ansprüche, **dadurch gekennzeichnet, dass** der Stützrahmen (2, 3) einen Stütztisch (2) umfasst, der einen im Wesentlichen horizontalen Bewegungsweg für Gießstellen (S), die zu gießendes Material aufnehmen können, das von den Düsen (56) ausgetrieben wird, definiert, wobei der Behälter (4) und die Gießeinheit (5) oberhalb des Weges angeordnet sind.

20. Eine Anlage gemäß Anspruch 19, **dadurch gekennzeichnet, dass** sie weiterhin eine mit dem Stütztisch (2) verbundene Hubeinheit (7) aufweist, die wahlweise eine Bewegung zur Anhebung der Gießstellen (S) zu den Gießdüsen (56) ausführen kann.

21. Eine Anlage gemäß Anspruch 19 oder Anspruch 20, **dadurch gekennzeichnet, dass** der Rahmen einen Wagen (3) umfasst, der entlang des Weges gleitend auf dem Stütztisch (2) angebracht ist, wobei mindestens die Gießeinheit (5) auf dem Wagen (3) befestigt ist.

22. Eine Anlage gemäß Anspruch 21, **dadurch gekennzeichnet, dass** auch der Behälter (4) auf dem Wagen (3) befestigt ist.

23. Eine Anlage gemäß einem der vorstehenden Ansprüche, **dadurch gekennzeichnet, dass** wenigstens die Gießeinheit (5) Mittel zur Bewegung entlang einer Achse, die im Wesentlichen senkrecht sowohl zu der Achse des Gleitens der Kolben (51), als auch zu der Achse entlang derer die dosierte Menge des zu gießenden Materials aus den jeweiligen Gießdüsen (56) ausgetrieben wird, aufweist.

24. Eine Anlage gemäß Ansprüche 21 und 23, **dadurch gekennzeichnet, dass** die Mittel zur Bewegung der Gießeinheit (5) entlang einer Achse, die im Wesentlichen senkrecht sowohl zu der Achse des Gleitens der Kolben (51), als auch zu der Achse entlang derer die dosierte Menge des zu gießenden Materials aus den jeweiligen Gießdüsen (56) ausgetrieben wird, eine mit der Gießeinheit (5) verbundene Schraube (80) umfassen, wobei die Schraube Antriebsmittel (82) aufweist und in einem an dem Wagen (3) fixierten, ein weibliches Gewinde aufweisenden Element (84) drehbar ist.

25. Eine Anlage gemäß einem der vorstehenden Ansprüche 21 bis 24, **dadurch gekennzeichnet, dass** die entsprechenden Antriebsmittel (24) mit dem Wagen (3) verbunden sind, um dem Wagen (3) eine Vor- und Zurückbewegung relativ zu dem Stütztisch (2) entlang des Weges zu vermitteln.

26. Eine Anlage gemäß Anspruch 25, **dadurch gekennzeichnet, dass** die entsprechenden Antriebsmittel (24) so ausgebildet sind, dass sie die Bewegung des Wagens (3) in einer konstanten Geschwindigkeit in einer Richtung der Vor- und Zurückbewegung bewirken.

## Revendications

1. Machine de coulée pour fournir des quantités dosées d'une matière à verser, comprenant :
- un châssis (2, 3),
- un récipient (4) qui est associé au châssis et qui peut recevoir une charge de matière à verser,
- une unité de coulée (5) comportant une pluralité de conduits de coulée (55, 59, 60) qui peuvent recevoir la matière à verser du récipient (4) et qui ont des buses de coulée respectives (56) associées à leurs extrémités inférieures,
- au moins un ensemble de pistons (51) placés côte à côte et montés chacun à coulissement dans un cylindre respectif (60), le mouvement coulissant de chaque piston (51) dans son cylindre respectif (60) provoquant l'expulsion d'une quantité dosée de matière à verser par une buse de coulée respective (56), et
- un moyen d'actionnement pour causer le mouvement coulissant des pistons (51) à l'intérieur des cylindres (60),
la machine étant **caractérisée en ce que** chaque piston (51) a une extrémité proximale (62) articulée sur une plaque (61) qui peut coulisser par l'action du moyen d'actionnement, et une extrémité distale (65) dont une partie est recouverte par une douille (67) qui s'étend axialement et faite d'un matériau élastique, de sorte que les pistons sont montés de manière flottante.

2. Machine selon la revendication 1, **caractérisée en ce qu'**un élément mélangeur (41) est associé au récipient (4) et peut rester immergé de façon continue dans la matière à verser, de sorte que la matière à verser peut être mélangée pour être délivrée à l'unité de coulée (5).

3. Machine selon la revendication 2, **caractérisée en ce que** l'élément mélangeur (41) comprend une lame qui peut suivre un mouvement oscillant autour d'un axe d'oscillation sensiblement horizontal (X4).

4. Machine selon la revendication 3, **caractérisée en ce que** le récipient (4) se présente sous la forme d'un réservoir sensiblement semi-cylindrique dont l'axe central (X4) constitue l'axe d'oscillation du mouvement oscillant de la lame.

5. Machine selon l'une quelconque des revendications 2 à 4, **caractérisée en ce que** l'élément mélangeur (41) a un moyen d'entraînement associé situé en un emplacement substantiellement à l'extérieur du récipient (4).

6. Machine selon l'une quelconque des revendications 2 à 5, **caractérisée en ce que** la lame (41) a une extrémité distale (41a) qui, en conséquence du mouvement oscillant, se déplace au voisinage de la paroi du récipient (4) qui comprend au moins une ouverture (42) permettant la communication avec l'unité de coulée (5), ladite ouverture étant balayée par l'extrémité distale (41a) de la lame (41) pendant le mouvement oscillant.

7. Machine selon l'une quelconque des revendications 2 à 6, **caractérisée en ce que** l'élément mélangeur (41) est monté de manière à pouvoir être retiré du récipient (4) pour faciliter les opérations de nettoyage et de maintenance.

8. Machine selon l'une quelconque des revendications précédentes, **caractérisée en ce que** les pistons (51) et les cylindres respectifs (60) s'étendent sensiblement à l'horizontale et transversalement par rapport au chemin d'alimentation de la matière à verser du récipient (4) vers les buses de coulée (56), et **en ce que** l'unité de coulée (5) comprend, en une position située entre le récipient (4) et les buses de coulée (56), un élément de fermeture mobile (58) qui définit au moins une partie (59) de chaque conduit de coulée (55, 59, 60), l'élément de fermeture mobile (58) étant orientable sélectivement entre :
- une position de préparation de coulée dans laquelle l'élément de fermeture (58) laisse les cylindres (60) exposés à une communication avec le récipient (4) et où les pistons (51) peuvent amener dans les cylindres (60) des quantités correspondantes de la matière à verser en coulissant dans les cylindres respectifs (60) dans une première direction, et
- une position de coulée, dans laquelle lesdites parties des conduits de coulée (59) prévues dans l'élément de fermeture (58) sont mises en communication avec les cylindres respectifs (60) des pistons (51) et des buses de coulée respectives (56) et les pistons (51) peuvent provoquer l'expulsion de quantités dosées correspondantes de matière à verser par les buses de coulée (56) en coulissant dans les cylindres respectifs (60) dans une deuxième direction.

9. Machine selon l'une quelconque des revendications précédentes, **caractérisée en ce que** le moyen d'actionnement provoque le déplacement de la plaque (61) à la manière d'un curseur pouvant coulisser le long d'un axe ayant l'orientation commune aux pistons (51).

10. Machine selon l'une quelconque des revendications 8 à 9, **caractérisée en ce que** le moyen d'actionnement comprend un ensemble bielle-manivelle motorisé qui peut provoquer le mouvement de la plaque qui peut coulisser comme un curseur dans les première et deuxième directions.

11. Machine selon l'une quelconque des revendications 8 à 10, **caractérisée en ce que** le moyen d'actionnement est configuré pour faire coulisser sélectivement les pistons (51) dans la deuxième direction avec des courses de coulissement sélectivement variables afin de faire varier sélectivement la quantité correspondante de matière à verser expulsée par les buses de coulée (56).

12. Machine selon l'une quelconque des revendications précédentes, **caractérisée en ce que** les pistons (51) de l'ensemble sont montés sur la plaque de support (61) de manière sélectivement amovible.

13. Machine selon l'une quelconque des revendications 8 à 12, **caractérisée en ce que** :
- l'unité de coulée (5) comprend une cavité cylindrique (57) ayant un axe principal respectif (X57),
- l'élément de fermeture (58) est constitué d'un corps à travers lequel s'étend ladite au moins une partie (59) de chaque conduit de coulée (55, 59, 60) et qui est monté dans la cavité (57) avec la possibilité de tourner autour de l'axe principal (X57), la position de préparation de coulée et la position de coulée correspondant à deux positions angulaires différentes du mouvement rotatif autour de l'axe principal (X57).

14. Machine selon la revendication 13, **caractérisée en ce que** l'élément de fermeture (58) est sensiblement semi-cylindrique et lesdites parties (59) des conduits de coulée comportent deux rangées de trous permettant la communication respectivement avec les buses de coulée (56) et avec les cylindres (60), les deux rangées de trous étant placées dans des positions sensiblement perpendiculaires à l'axe principal (X57).

15. Machine selon l'une quelconque des revendications précédentes, **caractérisée en ce qu'**elle comprend une pluralité d'ensembles de pistons (51), chaque ensemble étant apte sélectivement à commander le dosage de la matière à verser du récipient (4) vers un ensemble respectif de buses de coulée (56).

16. Machine selon la revendication 15, **caractérisée en ce que** des moyens d'actionnement séparés sont prévus pour les pistons (51) compris dans chacun des ensembles de la pluralité, chaque ensemble de pistons (51) étant actionnable indépendamment des autres ensembles de pistons (51).

17. Machine selon l'une quelconque des revendications précédentes, **caractérisée en ce que** le récipient (4) est situé en un emplacement situé au-dessus de l'unité de coulée (5).

18. Machine selon la revendication 17, **caractérisée en ce que** le récipient (4) est sélectivement amovible du châssis (2, 3).

19. Machine selon l'une quelconque des revendications précédentes, **caractérisée en ce que** le châssis (2, 3) comprend un banc de support (2) définissant un chemin de mouvement sensiblement horizontal pour des sites de coulée (S) qui peuvent recevoir la matière à verser expulsée par les buses (56) avec le récipient (4) et l'unité de coulée (5) situés au-dessus du chemin.

20. Machine selon la revendication 19, **caractérisée en ce qu'**elle comprend en outre, associée au banc (2), une unité de levage (7) qui peut effectuer sélectivement un mouvement pour élever les sites de coulée (S) vers les buses de coulée (56).

21. Machine selon la revendication 19 ou 20, **caractérisée en ce que** le châssis comprend un chariot (3) monté à coulissement sur le banc (2) le long du chemin, avec au moins l'unité de coulée (5) montée sur le chariot (3).

22. Machine selon la revendication 21, **caractérisée en ce que** le récipient (4) est également monté sur le chariot (3).

23. Machine selon l'une quelconque des revendications précédentes, **caractérisée en ce qu'**au moins l'unité de coulée (5) comporte un moyen permettant le mouvement le long d'un axe sensiblement perpendiculaire à la fois à l'axe de coulissement des pistons (51) et à l'axe le long duquel une quantité dosée de matière à verser est expulsée par la buse de coulée (56) respective.

24. Machine selon les revendications 21 et 23, **caractérisée en ce que** le moyen permettant de déplacer l'unité de coulée (5) le long d'un axe sensiblement perpendiculaire à la fois à l'axe de coulissement des pistons (51) et à l'axe le long duquel une quantité dosée de matière à verser est expulsée par la buse de coulée (56) respective comprend une vis (80) associée à l'unité de coulée (5), la vis ayant un moyen d'entraînement (82) et étant rotative dans un élément fileté femelle (84) fixé au chariot (3).

25. Machine selon l'une quelconque des revendications 21 à 24, **caractérisée en ce qu'**un moyen d'entraînement respectif (24) est associé au chariot (3) pour imprimer au chariot (3) un mouvement de va-et-vient par rapport au banc (2) le long du chemin.

26. Machine selon la revendication 25, **caractérisée en ce que** le moyen d'entraînement respectif (24) est configuré pour provoquer le mouvement du chariot (3) à vitesse constante dans une direction du mouvement de va-et-vient.
